# EUROPÄISCHE PATENTSCHRIFT

(11) **EP 2 509 840 B1**
(45) Veröffentlichungstag und Bekanntmachung des Hinweises auf die Patenterteilung: **30.04.2014**
(21) Anmeldenummer: 10803359.8
(22) Anmeldetag: 07.12.2010
(51) Int. Cl.: B60W 30/16, B60K 31/00, G08G 1/16, B60T 7/22, B60W 50/14, B60W 10/06, B60W 10/184, B60W 30/09

(54) **NOTBREMSASSISTENZSYSTEM ZUR UNTERSTÜTZUNG EINES FAHRERS EINES FAHRZEUGS BEIM ANFAHREN**
EMERGENCY BRAKE ASSISTANCE SYSTEM FOR SUPPORTING A DRIVER OF A VEHICLE WHILE STARTING
SYSTÈME D'ASSISTANCE AU FREINAGE D'URGENCE DESTINÉ À ASSISTER UN CONDUCTEUR D'UN VÉHICULE LORS DU DÉMARRAGE

(30) Priorität: 10.12.2009 DE 102009057836
(43) Veröffentlichungstag der Anmeldung: 17.10.2012
(73) Patentinhaber: Continental Teves AG & Co. oHG, 60488 Frankfurt (DE)
(72) Erfinder: FÖRSTER, Daniel, 64287 Darmstadt (DE); KLUG, Michael, 88239 Wangen (DE); HARTMANN, Andreas, 88433 Schemmerhofen-Assmannshardt (DE); WEISS, Thomas, 65527 Niedernhausen (DE)
(86) Internationale Anmeldenummer: PCT/DE2010/001420
(87) Internationale Veröffentlichungsnummer: WO 2011/069489

(56) Entgegenhaltungen:
- EP-A2- 2 028 632
- DE-A1-102005 033 087
- GB-A- 2 309 555
- US-A1- 2007 297 288

## Beschreibung

Die Erfindung betrifft ein Notbremsassistenzsystem zur Unterstützung eines Fahrers eines Fahrzeugs beim Anfahren gemäß Anspruch 1.

Heute auf dem Markt erhältliche auf Umfeldsensorik basierende Notbremsassistenzsysteme (EBA: Emergency Brake Assist) unterstützen den Fahrer eines Fahrzeugs bei Auffahrsituationen, in denen der Fahrer gar nicht, zu spät oder falsch reagiert. Die Unterstützung kann durch Aktivierung einer visuellen, akustischen und/oder haptischen Warnung, durch einen (teil-) autonomen Bremseingriff oder während eines Bremseingriffs durch den Fahrer erfolgen.

Die Schrift DE 10 2005 033 087 A1 ist als nächstliegender Stand der Technik nach dem Oberbegriff des Anspruchs 1 zu sehen und offenbart ein Verfahren und eine Vorrichtung zur Vermeidung von Auffahrunfällen. Dabei ist das Verfahren nur unterhalb einer vorgegebenen Geschwindigkeit aktiv und wird bei einer Betätigung von Gas-oder Bremspedal durch den Fahrer deaktiviert.

Die Offenlegungsschrift GB 2309 555 A beschreibt ein Fahrerassistenzsystem zur Längsregelung eines Fahrzeugs. Auch hier wird offenbart, dass durch eine Betätigung des Brems- oder Gaspedals durch den Fahrer das Assistenzsystem überstimmt (deaktiviert) wird.

Der Geschwindigkeitsbereich, in dem solche Systeme in der Regel aktiv sind, liegt typischerweise zwischen 30 km/h und 180 km/h (CMS: Collision Mitigation Brake System; CMBB: Collision Mitigation By Braking; CMBS: Collision Mitigation Brake System des Automobilherstellers Honda).

Neuerdings werden auch Systeme angeboten, die bereits ab etwa 0 km/h aktiv sind, wie die in der S-Klasse von dem Automobilhersteller Mercedes-Benz eingesetzte Pre-Safe-Bremse oder das von dem Automobilhersteller Volvo (beispielsweise im Modell XC60) angebotene Sicherheitssystem City-Safety, das von etwa 0 km/h bis etwa 30 km/h aktiv ist.

Ein Hauptpunkt im Systemdesign von Notbremsassistenzsystemen ist die Vermeidung und Behandlung von Fehlaktivierungen. Diese sind aufgrund der Defizite von Umfeldsensorik und -interpretation nicht auszuschließen, insbesondere da die Signalqualität der Umfeldsensorik üblicherweise nur als QM (Quality Management), d.h. als nicht sicherheitsrelevant nach ISO 26262, höchstens aber als ASIL (Automotive Safety Integrity Level) Stufe A nach ISO 26262 eingeordnet ist.

Fehlaktivierungen kann es abhängig von der verwendeten Umfeldsensorik insbesondere bei niedrigen Geschwindigkeiten geben. Zudem bereiten abhängig von der verwendeten Umfeldsensorik a priori stehende Objekte Probleme und stellen einen möglichen Grund für eine Fehlauslösung dar. Dies gilt insbesondere für die heute üblicherweise für Notbremsassistenzsysteme verwendeten Radarsensoriken.

In das Aktivierungs- und Abbruchkonzept von Notbremsassistenzsystemen werden auch Fahrerreaktionen und prädizierte Aktionen wie Lenken, Blinken, Bremsen und Gasgeben einbezogen.

Ein weiteres Sicherheitskonzept besteht ferner darin, dass bei Erkennen eines Abbruchwunsches oder einer Verkehrssituation, in der nicht von einem Aktivierungswunsch ausgegangen werden kann, die Aktivierung abgebrochen bzw. unterdrückt werden muss. Dieses Sicherheitsziel ist mit SIL3 nach der SIL (Security Integrity Level)-Norm bzw. ASIL Stufe D bewertet und branchenweit anerkannt. Sowohl ein Abbruch als auch eine Unterdrückung einer Aktivierung findet grundsätzlich dann statt, wenn der Fahrer das Gaspedal in positiver Richtung betätigt. Ein Beschleunigungs- oder Anfahrwunsch des Fahrers wird als "Nicht-Bremsen-Wollen" interpretiert, insbesondere im Fall eines sogenannten Kick-Down (der Fahrer tritt das Gaspedal komplett durch). Hierzu werden bzw. wird üblicherweise der Gradient und/oder Absolutwert der Gaspedalbetätigung anhand einer Interpretationsschwelle bewertet.

Aufgabe der vorliegenden Erfindung ist es nun, ein Notbremsassistenzsystem zur Unterstützung eines Fahrers eines Fahrzeugs beim Anfahren vorzuschlagen.

Diese Aufgabe wird durch ein Notbremsassistenzsystem zur Unterstützung eines Fahrers eines Fahrzeugs beim Anfahren mit den Merkmalen nach Anspruch 1 gelöst. Weitere Ausgestaltungen der Erfindung ergeben sich aus den abhängigen Ansprüchen.

Ein wesentlicher Gedanke der Erfindung besteht darin, eine Notbremsassistenz für einen Fahrer auch beim Beschleunigen bereitzustellen. Wie eingangs erläutert, wird bei herkömmlichen Notbremsassistenzkonzepten durch das Beschleunigen in der Regel die Aktivierung der Notbremsassistenzfunktion deaktiviert bzw. unterdrückt, was allerdings gerade beim Anfahren ein Nachteil sein kann, wenn ein Fahrer beispielsweise eine Verkehrsituation falsch einschätzt, zum Beispiel das Gaspedal betätigt, aber übersieht, dass das vor seinem Fahrzeug befindliche Fahrzeug steht, abbremst oder weniger stark als sein eigenes Fahrzeug beschleunigt, so dass es zu einem Auffahrunfall kommen kann. Solche Verkehrssituationen sind beispielsweise häufig in Baustellenbereichen auf Autobahnen gegeben, in denen keine Beschleunigungsspur vorhanden ist. In solchen Situationen muss ein Fahrer gleichzeitig den von hinten kommenden Verkehr auf der Zielspur und das vor seinem Fahrzeug fahrende Fahrzeug beurteilen. Eine schnelle Beschleunigung ist hier häufig erforderlich, was eine hohe Anspannung und Fehler hervorrufen kann. Der Fahrer und der Fahrer des vorausfahrenden Fahrzeugs interpretieren manchmal diese Situation unterschiedlich, wobei der Fahrer meistens von einem Beschleunigen des vorausfahrenden Fahrzeugs ausgeht. Wenn dies nicht der Fall ist oder das vorausfahrende Fahrzeug plötzlich seine Beschleunigung abbricht, kann es zu einem Auffahrunfall kommen. Hier soll die Erfindung Abhilfe schaffen, indem eine Kollisionsgefahr auf Basis von Daten einer Umfeldsensorik und einer Gaspedalsensorik erkannt und eine oder mehrere Maßnahmen zum Vermeiden einer drohenden Kollision durchgeführt werden, um den Fahrer zu unterstützen. Anfahren ist hierbei als Beschleunigen aus dem Stillstand oder aus niedriger Fahrzeuggeschwindigkeit definiert. Die Erfindung adressiert insbesondere die vorstehend beschriebene Unfallsituation einer Auffahrkollision beim Anfahren, die von den herkömmlichen und aus dem Stand der Technik bekannten Systemen aus Failsafe-Gründen (zur Erfüllung der funktionalen Sicherheitsanforderungen nach ISO 26262) nicht abgedeckt wird.

Die vorliegende Erfindung betrifft nun gemäß einer Ausführungsform ein Notbremsassistenzsystem zur Unterstützung eines Fahrers eines Fahrzeugs beim Anfahren mit
- einer Kollisionsgefahr-Erkennungseinheit, die ausgebildet ist, basierend auf Daten einer Umfeldsensorik zum Erfassen von Objekten vor dem Fahrzeug und Daten einer Gaspedalsensorik zum Erfassen eines Beschleunigungswunsches des Fahrers eine Kollisionsgefahr mit einem Objekt vor dem Fahrzeug zu erkennen, und
- einer Kollisions-Vermeidungseinheit, die ausgebildet ist, abhängig von Daten der Kollisionsgefahr-Erkennungseinheit Maßnahmen zum Vermeiden einer drohenden Kollision mit dem Objekt vor dem Fahrzeug durchzuführen, wobei
- das Notbremsassistenzsystem (10) ausgebildet ist, eine Deaktivierung einer Abbruch- und Aktivierungsunterdrückungs-Bedingung eines Sicherheitskonzepts bei Erfassen eines Beschleunigungswunsches durch den Fahrer bei einer Fahrzeuggeschwindigkeit, die niedriger als eine vorgegebene Geschwindigkeitsschwelle ist, temporär für eine vorgegebene Zeitdauer durchzuführen.

Hierdurch kann die erfindungsgemäße Notbremsassistenzfunktion zusammen mit einem bestehenden Sicherheitskonzept, das bei Erkennen eines Beschleunigungswunsches die Aktivierung einer Notbremsassistenzfunktion deaktiviert bzw. unterdrückt, betrieben werden, ohne das Sicherheitskonzept generell zu gefährden oder gar außer Kraft zu setzen.

Die Kollisionsgefahr-Erkennungseinheit kann ausgebildet sein,
- eine Fahrzeugbeschleunigung innerhalb eines adaptierbaren Zeitraumes basierend auf den Daten der Gaspedalsensorik abzuschätzen und
- die Kollisionsgefahr mit einem Objekt vor dem Fahrzeug zu erkennen, wenn die abgeschätzte Fahrzeugbeschleunigung eine Kollision mit dem Objekt erwarten lässt. Die Kollisionsgefahr-Erkennungseinheit kann auch ausgebildet sein,
- eine Zeit bis zur Kollision ttc, eine Zeit bis zum erforderlichen Bremsmanöver ttb, eine Zeit bis zum erforderlichen Lenkmanöver tts und/oder eine notwendige Verzögerung zur Vermeidung der Kollision a_nec basierend auf den Daten der Umfeldsensorik und der Gaspedalsensorik zu berechnen, und
- die Kollisionsgefahr mit einem Objekt vor dem Fahrzeug anhand eines oder mehrerer dieser berechneten Werte zu bewerten.

Die Kollisions-Vermeidungseinheit kann ausgebildet sein, als Maßnahmen zum Vermeiden einer drohenden Kollision mit dem Objekt vor dem Fahrzeug eine oder mehrere der folgenden Aktionen durchzuführen:
- Ausgeben eines Bremseingriffssignals zum Ansteuern eines elektronischen Bremssystems für einen insbesondere autonomen, schnellen und zeitlich begrenzten Bremseingriff;
- Ausgeben eines Beschleunigungssperrsignals zum Ansteuern eines Motorsteuergeräts für eine insbesondere zeitlich begrenzte Unterdrückung des Beschleunigungswunsches;
- Ausgeben einer visuellen, akustischen und/oder haptischen Warnung für den Fahrer.

Die Kollisions-Vermeidungseinheit kann ferner ausgebildet sein, ein Bremseingriffssignal mit einem variablen Gradienten und für eine variable Zielverzögerung, insbesondere einer maximal möglichen Verzögerung auszugeben.

Das System kann weiterhin ausgebildet sein, ein Deaktivierungssignal zur Deaktivierung einer Abbruch- und Aktivierungsunterdrückungs-Bedingung eines Sicherheitskonzepts bei Erfassen eines Beschleunigungswunsches durch den Fahrer temporär für eine vorgegebene Zeitdauer, insbesondere für etwa 1 bis 3 Sekunden, auszugeben.

Ferner kann das System ausgebildet sein, das Deaktivierungssignal nur dann auszugeben, wenn
- das Fahrzeug steht oder
- die Fahrzeuggeschwindigkeit niedriger als eine vorgegebene Geschwindigkeitsschwelle und die Beschleunigung des Fahrzeugs nicht negativ ist.

Schließlich kann das System ausgebildet sein, das Deaktivierungssignal nicht auszugeben, wenn eine negative Beschleunigung des Fahrzeugs vorliegt.

Weitere Vorteile und Anwendungsmöglichkeiten der vorliegenden Erfindung ergeben sich aus der nachfolgenden Beschreibung in Verbindung mit dem/den in der/den Zeichnung(en) dargestellten Ausführungsbeispiel(en).

In der Beschreibung, in den Ansprüchen, in der Zusammenfassung und in der/den Zeichnung(en) werden die in der hinten angeführten Liste der Bezugszeichen verwendeten Begriffe, und zugeordneten Bezugszeichen verwendet.

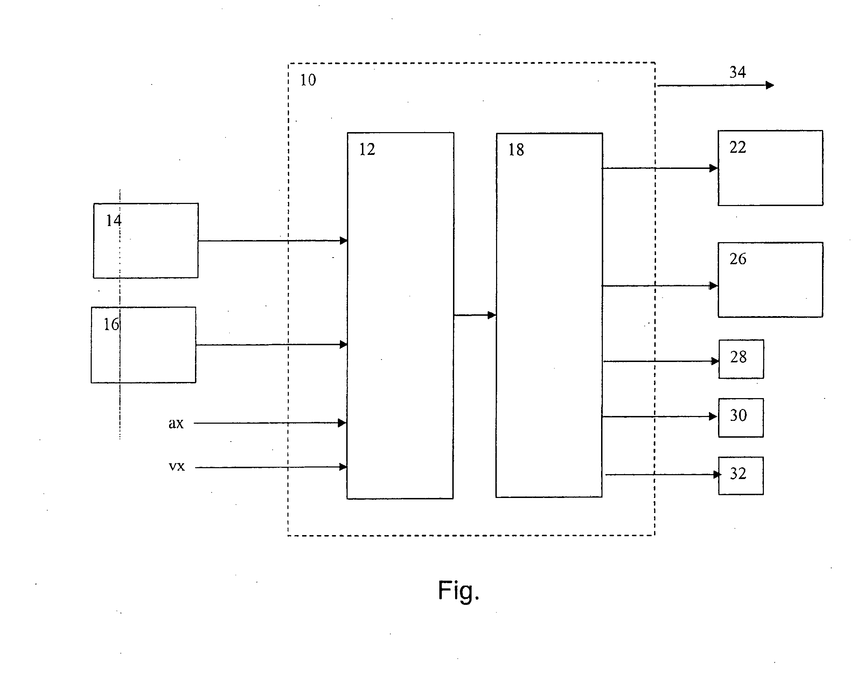

Die Zeichnung(en) zeigt/zeigen in der einzigen Fig. ein Blockschaltbild eines Ausführungsbeispiels eines Notbremsassistenzsystems gemäß der vorliegenden Erfindung.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

In der einzigen Fig. ist ein Notbremsassistenzsystem 10 gezeigt, das eine Kollisionsgefahr-Erkennungseinheit 12 und eine Kollisions-Vermeidungseinheit 18 aufweist. Das System 10 kann beispielsweise in Form eines elektronischen Steuergeräts (ECU: Electronic Control Unit) oder auch in Form einer integrierten Schaltung zum Einbau in ein ECU ausgebildet sein. Die beiden Einheite 12 und 18 des Systems können auf verschiedene Arten implementiert sein, beispielsweise als separate integrierte Schaltungen, in einer integrierten Schaltung als Funktionsmodule, oder als Programmmodule eines Notbremsassistenz-Programms, das von einem leistungsfähigen Prozessor eines ECU ausgeführt wird, um die erfindungsgemäßen Notbremsassistenzfunktionen zu implementieren.

Dem Notbremsassistenzsystem 10 werden die aktuelle Beschleunigung ax und die aktuelle Geschwindigkeit vx des Fahrzeugs, in dem das Notbremsassistenzsystem 10 eingesetzt wird, zugeführt. Ferner ist das Notbremsassistenzsystem 10, genauer gesagt die Kollisionsgefahr-Erkennungseinheit 12 mit einer Umfeldensorik 14 und einer Gaspedalsensorik 16 des Fahrzeugs gekoppelt, um Daten von diesen beiden Sensoriken zu empfangen.

Das Notbremsassistenzsystem 10 zum Empfangen und Verarbeiten von Signalen weiterer Sensoriken ausgebildet sein, wie von Signalen einer Brems(pedal)sensorik beispielsweise vom THZ (Tandem-Hauptzylinder) oder vom BLS (Bremslichtschalter), einer Lenkradsensorik, einer Raddrehzahlsensorik und einer Intertialsensorik, insbesondere von einer ESC (Electronic Stability Control).

Die Umfeldsensorik 14 ist an der Front des Fahrzeugs vorgesehen, um einen Bereich vor dem Fahrzeug und darin befindliche Objekte wie ein vorausfahrendes Fahrzeug zu erfassen. Als Umfeldsensorik 14 können gängige Sensoriken von Fahrerassistenzsystemen eingesetzt werden, wie beispielsweise Radar-, Lidar-, Kamera-, Ultraschall-Sensoriken. Diese Sensoriken können einzeln oder auch kombiniert eingesetzt werden.

Das Notbremsassistenzsystem 10 ist ferner ausgebildet, ein Bremseingriffssignal 20, ein Beschleunigungssperrsignal 24 und ein Deaktivierungssignal 34 abhängig von empfangenen Daten der Umfeldsensorik 14 und der Gaspedalsensorik 16 zu erzeugen und auszugeben. Das Bremseingriffssignal 20 wird einem elektronischen Bremssystem 22 beispielsweise über ein Fahrzeugbussystem zur Verfügung gestellt, um es für einen (autonomen) Bremsdruckaufbau anzusteuern. Das Beschleunigungssperrsignal 24 wird beispielsweise über ein Fahrzeugbussystem einem Motorsteuergerät 26 zur Verfügung gestellt, um eine vom Fahrer gewünschte Beschleunigung sperren zu können. Das Deaktivierungssignal 34 dient dazu, eine Abbruch- und Aktivierungsunterdrückungs-Bedingung eines Sicherheitskonzepts bei Erfassen eines Beschleunigungswunsches durch den Fahrer temporär für eine vorgegebene Zeitdauer zu deaktivieren. Dieses Sicherheitskonzept kann beispielsweise durch eine Notbremsassistenzfunktion beim Auffahren auf langsamere vorausfahrende Fahrzeuge oder stehende Objekte vorgesehen sein, und soll vor allem verhindern, dass der Fahrer durch Gasgeben einen Auffahrunfall verursacht. Allerdings ist es wie eingangs geschildert in bestimmten Situationen wie beim Anfahren hinderlich und soll daher gerade dann deaktiviert werden, wenn auch nur für einen kurzen Zeitraum.

Schließlich ist das Notbremsassistenzsystem 10 noch ausgebildet, eine visuelle, akustische und haptische Warnung 28, 30 bzw. 32 auszugeben. Die visuelle Warnung 28 kann beispielsweise durch Aufleuchten einer Wamanzeige am Armaturenbrett des Fahrzeugs erfolgen, die akustische Warnung 30 durch Erzeugen eines deutlich wahrnehmbaren Warntons, und die haptische beispielsweise durch Erzeugen von Vibrationen des Lenkrads oder des Gaspedals.

Im Folgenden wird nun im Detail beschrieben, wie die Daten der Umfeldsensorik 14 und des Gaspedalsensorik 16 zum Erzeugen der Signale 20, 24, 28, 30 und 32 von der Kollisionsgefahr-Erkennungseinheit 12 und der Kollisions-Vermeidungseinheit 18 verarbeitet werden.

Die Kollisionsgefahr-Erkennungseinheit 12 wertet hierzu die Daten der Umfeldsensorik 14 dahingehend aus, ob sich im Überwachungsbereich der Umfeldsensorik 14 ein Objekt, insbesondere ein vorausfahrendes Fahrzeug befindet. Weiterhin wertet die Kollisionsgefahr-Erkennungseinheit 12 die Daten der Gaspedalsensorik 16 aus, ob diese einen Beschleunigungswunsch des Fahrers signalisieren. Wurde ein vorausfahrendes Fahrzeug erfasst und besteht ein Beschleunigungswunsch, berechnet die Kollisionsgefahr-Erkennungseinheit 12 die zu erwartende Fahrzeugbeschleunigung anhand der Daten der Gaspedalsensorik 16 während eines adaptierbaren Zeitfensters/Zeitraums. Die so prädizierte Fahrzeugbeschleunigung wird fortlaufend während des adaptierbaren Zeitfensters aktualisiert. Wenn die prädizierte Fahrzeugbeschleunigung eine Kollision mit dem vorausfahrenden Fahrzeug erwarten lässt, erkennt die Kollisionsgefahr-Erkennungseinheit 12 eine Kollisionsgefahr. Weiterhin berechnet die Kollisionsgefahr-Erkennungseinheit 12 aus den Daten der Umfeldsensorik 14 und der prädizierten Fahrzeugbeschleunigung
- eine Zeit bis zur Kollision ttc (time to collision) mit dem vorausfahrenden Fahrzeug,
- eine Zeit bis zum erforderlichen Bremsmanöver ttb (time to brake), um eine drohende Kollision mit dem vorausfahrenden Fahrzeug zu vermeiden,
- eine Zeit bis zum erforderlichen Lenkmanöver tts (time to steer), um die drohende Kollision mit dem vorausfahrenden Fahrzeug zu vermeiden, und/oder
- eine notwendige Verzögerung zur Vermeidung der Kollision a_nec.

Wird eine Kollisionsgefahr erkannt, signalisiert die Kollisionsgefahr-Erkennungseinheit 12 dies der Kollisions-Vermeidungseinheit 18. Ferner werden die Werte ttc, ttb, tts und a_nec an die Kollisions-Vermeidungseinheit 18 übermittelt.

Die Kollisions-Vermeidungseinheit 18 berechnet anhand der empfangenen Werte einen autonomen, schnellen und zeitlich begrenzten Bremseingriff durch das elektronische Bremssystem 22 und erzeugt ein entsprechendes Bremseingriffssignal 20, das an das Bremssystem 22 ausgegeben wird. Außerdem erzeugt die Kollisions-Vermeidungseinheit 18 ein Beschleunigungssperrsignal 24, das an das Motorsteuergerät 26 ausgegeben wird. Das elektronische Bremssystem 22 baut nach Empfang des Bremseingriffssignals 20 einen entsprechenden Bremsdruck in den Bremsen des Fahrzeugs auf, um das Fahrzeugs derart zu verzögern, dass eine Kollision vermieden werden kann. Das Motorsteuergerät 26 steuert nach Empfang des Beschleunigungssperrsignals 24 die Kraftstoffzufuhr derart, dass der Motor das Fahrzeug nicht beschleunigt. Weiterhin erzeugt die Kollisions-Vermeidungseinheit 18 eine visuelle, akustische und haptische Warnung 28, 30 bzw. 32 für den Fahrer.

In der Regel wird das Notbremsassistenzsystem 10 zusammen mit weiteren Fahrerassistenzsystemen in einem Fahrzeug eingesetzt werden, insbesondere mit den eingangs geschilderten Notbremssystemen, die insbesondere eine Auffahrkollision vermeiden sollen, wenn das Fahrzeug mit zu hoher Geschwindigkeit sich einem vorausfahrenden Fahrzeug beispielsweise an einem Stauende oder einer Ampel nähert. Da eine Bremsaktivierung bei letztgenannten Notbremssystemen wie eingangs geschildert aber aus Failsafe-Gründen beim Beschleunigen durch den Fahrer außer Kraft gesetzt wird, d.h. beim Betätigen des Gaspedals, ist es für eine einwandfreie Zusammenarbeit derartiger Notbremssysteme mit dem erfindungsgemäßen Notbremsassistenzsystem erforderlich, dass die durch das Sicherheitskonzept der Notbremssysteme notwendige Abbruch- und Aktivierungsunterdrückungsbedingung "Fahrerabbruch bzw. Beschleunigungswunsch durch entsprechendes Betätigen des Gaspedals" temporär für eine bestimmte Zeitdauer ausgeschaltet bzw. unterdrückt wird, so dass das erfindungsgemäße Notbremsassistenzsystem 10 problemlos arbeiten kann. Die Zeitdauer des temporären Ausschaltens kann fest vorgegeben oder variabel sein, sowie unabhängig oder bedingt vom Systemzustand bzw. der Erkennung bestimmter Verkehrssituationen. Insbesondere kann die temporäre Deaktivierung der Abbruch- und Aktivierungsunterdrückungsbedingung ständig oder bedingt nur in bestimmten Fahrsituationen wie etwa Anfahrsituationen realisiert werden. Durch die temporäre Deaktivierung von Abbruchbedingungen kann das erfindungsgemäße Notbremsassistenzsystem 10 in diesen Situationen eingreifen, ohne generell das für Notbremssysteme notwendige Sicherheitskonzept zu gefährden. Die Zeitdauer einer temporären Deaktivierung eines Sicherheitskonzepts eines Notbremssystems kann etwa 1-3 Sekunden betragen. Je nach Systemauslegung sind jedoch auch andere Zeitdauern möglich. Nach Ablauf der Zeitdauer wird bzw. werden die Abbruchbedingung(en) wieder aktiviert. Im Falle einer Fehlaktivierung ist der Beschleunigungs- bzw. Abbruchwunsch des Fahrers nur für diese begrenzte Zeitdauer underdrückt und kann nach Ablauf der Zeitdauer sofort umgesetzt werden. Dadurch wird die Verfügbarkeit des Notbremssystems auf die beschriebene Situation maßgeblich erweitert.

Die temporäre Deaktivierung der Abbruch- und Aktivierungsunterdrückungsbedingung kann ständig oder bedingt nur in bestimmten Fahrsituationen (etwa Anfahrsituationen) realisiert werden. Für eine Realisierung mit einer bedingten Deaktivierung bei Anfahrsituationen erfolgt eine Erkennung einer Anfahrsituation, indem beispielsweise eine Anfahrsituation bei Stillstand des Fahrzeugs oder unterhalb einer niedrigen Geschwindigkeitsschwelle mit nicht negativer Beschleunigung (keine Verzögerung) des Fahrzeugs interpretiert wird. Hierzu werden dem Notbremsassistenzsystem 10 die aktuelle longitudinale Beschleunigung ax und die aktuelle longitudinale Geschwindigkeit vx zugeführt. Die Daten ax und vx können beispielsweise über eine Fahrzeugbus von anderen ECUs des Fahrzeugs wie ABS oder ESP zur Verfügung gestellt werden. Sobald die Bedingung vx < Geschwindigkeitsschwelle und ax > 0 erfüllt sind, kann das Notbremsassistenzsystem 10 eine Anfahrsituation des Fahrzeugs annehmen. Optional kann auch der beginnende Beschleunigungswunsch des Fahrers (positiver Gaspedalgradient), insbesondere ableitbar aus den Daten der Gaspedalsensorik 16, in die Erkennung einer Anfahrsituation einbezogen werden, um eine besonders zuverlässige und sichere Erkennung einer Anfahrsituation durch das Notbremsassistenzsystem 10 zu gewährleisten. Erkennt das Notbremsassistenzsystem 10 eine Anfahrsituation, kann es ein Deaktivierungssignal 34 ausgeben, das einem Notbremssystem zum temporären Ausschalten einer Abbruch- und Aktivierungsunterdrückungsbedingung zugeführt werden kann, um zu vermeiden, dass keine Notbremsung beim Anfahren vorgenommen werden kann. Als zusätzliches Sicherheitskriterium kann das temporäre Ausschalten der Abbruch- und Aktivierungsunterdrückungsbedingung dann nicht erfolgen, wenn eine Notbremssituation (keine Anfahrsituation) vorliegt, um einen Abbruchwunsch im Standardfall nicht zu unterdrücken. In einem solchen Fall gibt das Notbremsassistenzsystem 10 kein Deaktivierungssignal 34 aus.

Für einen Einsatz der Erfindung können Umfeldsensoren mit geringen technischen Anforderungen gegenüber Standard long range Radarsensoren ausreichen, da die Reichweite nur ca. 1-10 Meter betragen muss. Beispielsweise ist ein Lidar-Sensor oder eine Kamera für die Zwecke der vorliegenden Erfindung gut geeignet. Wie bereits oben beschrieben kann eine Warnung bzw. Systemeingriffsinformation für den Fahrer insbesondere während und nach dem Eingriff durch eine Mensch-Maschine-Schnittstelle wie beispielsweise einen Instrumentencluster erfolgen. Die Art der Warnung kann akustisch, visuell und/oder haptisch erfolgen, beispielsweise als Testmessage, ein aufleuchtendes Symbol in einem Instrument, ein akustischer Alarm und/oder eine Vibration des Lenkrads, Gas- oder Bremspedals.

Die vorliegende Erfindung unterstützt einen Fahrer eines, Fahrzeugs insbesondere beim Anfahren durch eine Notbremsassistenzfunktion, so dass insbesondere in bestimmten Verkehrssituationen wie Baustellenbereichen Auffahrunfälle verhindert werden, die vor allem durch Fehleinschätzungen des Fahrers zustande kommen können.

### Bezugszeichen

- 10: Notbremsassistenzsystem
- 12: Kollisionsgefahr-Erkennungseinheit
- 14: Umfeldsensorik
- 16: Gaspedalsensorik
- 18: Kollisions-Vermeidungseinheit
- 20: Bremseingriffssignal
- 22: elektronisches Bremssystem
- 24: Beschleunigungssperrsignal
- 26: Motorsteuergerät
- 28: visuelle Warnung
- 30: akustische Warnung
- 32: haptische Warnung
- 34: Deaktivierungssignal

## Patentansprüche

1. Notbremsassistenzsystem (10) zur Unterstützung eines Fahrers eines Fahrzeugs beim Anfahren mit
- einer Kollisionsgefahr-Erkennungseinheit (12), die ausgebildet ist, basierend auf Daten einer Umfeldsensorik (14) zum Erfassen von Objekten vor dem Fahrzeug und Daten einer Gaspedalsensorik (16) zum Erfassen eines Beschleunigungswunsches des Fahrers eine Kollisionsgefahr mit einem Objekt vor dem Fahrzeug zu erkennen, und
- einer Kollisions-Vermeidungseinheit (18), die ausgebildet ist, abhängig von Daten der Kollisionsgefahr-Erkennungseinheit Maßnahmen zum Vermeiden einer drohenden Kollision mit dem Objekt vor dem Fahrzeug durchzuführen, **dadurch gekennzeichnet, dass**
- das Notbremsassistenzsystem (10) ausgebildet ist, eine Deaktivierung einer Abbruch- und Aktivierungsunterdrückungs-Bedingung eines Sicherheitskonzepts bei Erfassen eines Beschleunigungswunsches durch den Fahrer bei einer Fahrzeuggeschwindigkeit, die niedriger als eine vorgegebene Geschwindigkeitsschwelle ist, temporär für eine vorgegebene Zeitdauer durchzuführen.

2. System nach Anspruch 1,
**dadurch gekennzeichnet, dass**
die Kollisionsgefahr-Erkennungseinheit ausgebildet ist,
- eine Fahrzeugbeschleunigung innerhalb eines adaptierbaren Zeitraumes basierend auf den Daten der Gaspedalsensorik abzuschätzen und
- die Kollisionsgefahr mit einem Objekt vor dem Fahrzeug zu erkennen, wenn die abgeschätzte Fahrzeugbeschleunigung eine Kollision mit dem Objekt erwarten lässt.

3. System nach Anspruch 1 oder 2,
**dadurch gekennzeichnet, dass**
die Kollisionsgefahr-Erkennungseinheit ausgebildet ist,
- eine Zeit bis zur Kollision ttc, eine Zeit bis zum erforderlichen Bremsmanöver ttb, eine Zeit bis zum erforderlichen Lenkmanöver tts und/oder eine notwendige Verzögerung zur Vermeidung der Kollision a_nec basierend auf den Daten der Umfeldsensorik und der Gaspedalsensorik zu berechnen, und
- die Kollisionsgefahr mit einem Objekt vor dem Fahrzeug anhand eines oder mehrerer dieser berechneten Werte zu bewerten.

4. System nach Anspruch 1, 2 oder 3,
**dadurch gekennzeichnet, dass**
die Kollisions-Vermeidungseinheit ausgebildet ist, als Maßnahmen zum Vermeiden einer drohenden Kollision mit dem Objekt vor dem Fahrzeug eine oder mehrere der folgenden Aktionen durchzuführen:
- Ausgeben eines Bremseingriffssignals (20) zum Ansteuern eines elektronischen Bremssystems (22) für einen insbesondere autonomen, schnellen und zeitlich begrenzten Bremseingriff;
- Ausgeben eines Beschleunigungssperrsignals (24) zum Ansteuern eines Motorsteuergeräts (26) für eine insbesondere zeitlich begrenzte Unterdrückung des Beschleunigungswunsches;
- Ausgeben einer visuellen, akustischen und/oder haptischen Warnung (28, 30, 32) für den Fahrer.

5. System nach Anspruch 4,
**dadurch gekennzeichnet, dass**
die Kollisions-Vermeidungseinheit ferner ausgebildet ist, ein Bremseingriffssignal mit einem variablen Gradienten und für eine variable Zielverzögerung, insbesondere einer maximal möglichen Verzögerung auszugeben.

6. System nach einem der vorhergehenden Ansprüche,
**dadurch gekennzeichnet, dass**
es ausgebildet ist, ein Deaktivierungssignal (34) zur Deaktivierung einer Abbruch- und Aktivierungsunterdrückungs-Bedingung eines Sicherheitskonzepts bei Erfassen eines Beschleunigungswunsches durch den Fahrer temporär für eine vorgegebene Zeitdauer, insbesondere für etwa 1 bis 3 Sekunden, auszugeben.

7. System nach Anspruch 6,
**dadurch gekennzeichnet, dass**
es ferner ausgebildet ist, das Deaktivierungssignal nur dann auszugeben, wenn
- das Fahrzeug steht oder
- die Fahrzeuggeschwindigkeit niedriger als eine vorgegebene Geschwindigkeitsschwelle und die Beschleunigung des Fahrzeugs nicht negativ ist

8. System nach Anspruch 6 oder 7,
**dadurch gekennzeichnet, dass**
es ferner ausgebildet ist, das Deaktivierungssignal nicht auszugeben, wenn eine negative Beschleunigung des Fahrzeugs vorliegt.

## Claims

1. An emergency braking assistance system (10) for assisting a driver of a vehicle in starting a driving process having
- a danger-of-collision detection unit (12) designed to detect, on the basis of data of a surroundings sensor system (14) for the detection of objects in front of the vehicle and data of a gas pedal sensor system (16) for the detection of an acceleration intention of the driver, a danger of a collision with an object in front of the vehicle, and
- a collision avoidance unit (18) designed to take, depending on data of the danger-of-collision detection unit, measures for avoiding an imminent collision with the object in front of the vehicle, **characterized in that**
- the emergency braking assistance system (10) is designed to temporarily deactivate, for a predetermined period of time, an abortion and activation suppression condition of a safety concept when detecting an acceleration intention of the driver at a vehicle speed that is lower than a predetermined speed threshold value.

2. The system according to claim 1,
**characterized in that**
the danger-of-collision detection unit is designed
- to estimate a vehicle acceleration within an adaptable period of time on the basis of the data of the gas pedal sensor system and
- to detect the danger of a collision with an object in front of the vehicle when the estimated vehicle acceleration gives reason to expect a collision with the object.

3. The system according to claim 1 or 2,
**characterized in that**
the danger-of-collision detection unit is designed
- to calculate a time until the collision ttc, a time until the required braking maneuver ttb, a time until the required steering maneuver tts and/or a required deceleration for avoiding the collision a_nec on the basis of the data of the surroundings sensor system and of the gas pedal sensor system and
- to assess the danger of a collision with an object in front of the vehicle on the basis of one or more of these calculated values.

4. The system according to claim 1, 2 or 3
**characterized in that**
the collision avoidance unit is designed to perform one or more of the following actions as measures for avoiding an imminent collision with the object in front of the vehicle:
- outputting a braking intervention signal (20) for driving an electronic braking system (22) for an, in particular, autonomous, fast and limited-in-time braking intervention;
- outputting an acceleration inhibiting signal (24) for driving an engine control device (26) for an, in particular, limited-in-time suppression of the acceleration intention;
- outputting a visual, acoustic and/or haptic warning (28, 30, 32) to the driver.

5. The system according to claim 4,
**characterized in that**
the collision avoidance unit is further designed to output a braking intervention signal with a variable gradient and for a variable target deceleration, particularly a maximally possible deceleration.

6. The system according to any one of the preceding claims,
**characterized in that**
it is designed to output a deactivation signal (34) for temporarily deactivating, for a predetermined period of time, particularly for about 1 to 3 seconds, an abortion and activation suppression condition of a safety concept when detecting an acceleration intention of the driver.

7. The system according to claim 6,
**characterized in that**
it is further designed to output the deactivation signal only when
- the vehicle is standing or
- the vehicle speed is lower than a predetermined speed threshold value and the acceleration of the vehicle is not negative.

8. The system according to claim 6 or 7,
**characterized in that**
it is further designed not to output the deactivation signal when the acceleration of the vehicle is negative.

## Revendications

1. Système d'assistance au freinage d'urgence (10) destiné à assister un conducteur d'un véhicule lors du démarrage, avec
- une unité de détection d'un risque de collision (12) qui est conçu pour détecter un risque de collision avec un objet devant le véhicule sur la base de données d'un ensemble de capteurs d'environnement (14) destinés à détecter des objets devant le véhicule et de données d'un ensemble de capteurs de pédale d'accélérateur (16) destinés à détecter un souhait d'accélération du conducteur, et
- une unité d'évitement de collision (18) qui est constituée pour mettre oeuvre, en fonction des données de l'unité de détection d'un risque de collision, des mesures pour éviter une collision imminente avec l'objet devant le véhicule, **caractérisé en ce que**
- le système d'assistance au freinage d'urgence (10) est constitué pour réaliser de façon temporaire, pendant une période de temps prédéterminée, une désactivation d'une condition d'interruption et de suppression d'activation d'un concept de sécurité lors de la détection d'un souhait d'accélération par le conducteur à une vitesse du véhicule qui est inférieure à un seuil de vitesse prédéfini.

2. Système selon la revendication 1,
**caractérisé en ce que**
l'unité de détection d'un risque de collision est constituée
- pour estimer une accélération du véhicule à l'intérieur d'une période de temps adaptable sur la base des données de l'ensemble de capteurs de pédale d'accélérateur et
- pour détecter le risque de collision avec un objet devant le véhicule quand l'accélération du véhicule estimée fait anticiper une collision avec l'objet.

3. Système selon la revendication 1 ou 2,
**caractérisé en ce que**
l'unité de détection d'un risque de collision est constituée
- pour calculer un temps jusqu'à la collision ttc, un temps jusqu'à la manoeuvre de freinage ttb nécessaire, un temps jusqu'à la manoeuvre de braquage tts nécessaire et/ou une temporisation nécessaire pour éviter la collision a_nec sur base des données de l'ensemble de capteurs d'environnement et de l'ensemble de capteurs de pédale d'accélérateur, et
- pour évaluer le risque de collision avec un objet devant le véhicule à l'aide d'une ou de plusieurs de ces valeurs calculées.

4. Système selon la revendication 1, 2 ou 3,
**caractérisé en ce que**
l'unité d'évitement de collision est constituée pour effectuer une ou plusieurs des actions suivantes en tant que mesures pour éviter une collision imminente avec l'objet devant le véhicule :
- délivrance d'un signal d'intervention de freinage (20) pour le pilotage d'un système de freinage électronique (22) pour une intervention de freinage en particulier autonome, rapide et limitée dans le temps ;
- délivrance d'un signal de blocage d'accélération (24) pour le pilotage d'un appareil de commande de moteur (26) pour une suppression, en particulier limitée dans le temps, du souhait d'accélération ;
- délivrance d'un avertissement visuel, acoustique et/ou par le toucher (28, 30, 32) destiné au conducteur.

5. Système selon la revendication 4,
**caractérisé en ce que**
l'unité d'évitement de collision est également constituée pour délivrer un signal d'intervention de freinage avec un gradient variable et pour une temporisation ciblée variable, en particulier une temporisation la plus grande possible.

6. Système selon une des revendications précédentes,
**caractérisé en ce**
**qu'**il est constitué pour délivrer un signal de désactivation (34) destiné à la désactivation d'une condition d'interruption et de suppression d'activation d'un concept de sécurité lors de la détection d'un souhait d'accélération par le conducteur, de façon temporaire pendant une durée prédéfinie, en particulier pendant environ 1 à 3 secondes.

7. Système selon la revendication 6,
**caractérisé en ce**
**qu'**il est également constitué pour ne délivrer le signal de désactivation que
- si le véhicule est immobile ou
- si la vitesse du véhicule est inférieure à un seuil de vitesse prédéfini et si l'accélération du véhicule n'est pas négative.

8. Système selon la revendication 6 ou 7,
**caractérisé en ce**
**qu'**il est également constitué pour ne pas délivrer le signal de désactivation en présence d'une accélération négative du véhicule.
